# EUROPEAN PATENT SPECIFICATION

(11) **EP 4 541 658 B1**
(45) Date of publication and mention of the grant of the patent: **25.11.2026**
(21) Application number: 24206340.2
(22) Date of filing: 14.10.2024
(51) Int. Cl.: B60Q 1/00, F21S 45/50

(54) **VEHICLE LIGHT**
FAHRZEUGLEUCHTE
FEU DE VÉHICULE

(30) Priority: 17.10.2023 CN 202311349235
(43) Date of publication of application: 23.04.2025
(73) Proprietor: Stellantis Auto SAS, 78300 Poissy (FR)
(72) Inventor: WANG, Zi Ye, SHANGHAI 200030 (CN); LIU, Tao Claire, SHANGHAI 200030 (CN); SONG, Xiu Min, SHANGHAI 200030 (CN); SONG, Wenbin Mark, SHANGHAI 200030 (CN); LI, Bing, SHANGHAI 200030 (CN)
(74) Representative: ESIP

(56) References cited:
- FR-A1- 3 003 336
- JP-A- 2004 362 975
- JP-A- 2022 086 255
- US-A- 5 722 768
- US-A- 6 161 951
- US-A1- 2008 266 892

## Description

### RELATED FIELD

The present invention generally relates to the technical field of vehicles, and more particularly, to vehicle lights.

### BACKGROUND

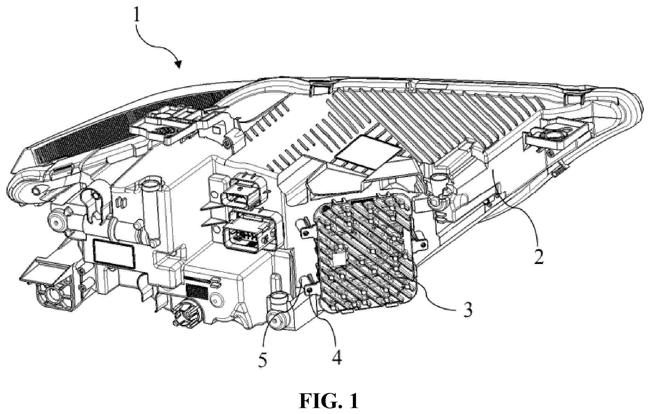

As shown in FIG. 1, an existing vehicle light 1 generally includes a housing 2, a lighting module accommodated in the housing 2, and a lighting drive module 3 (LDM) fixed to the housing 2. The lighting drive module 3 can be fixed to the housing 2 via fasteners 4. Typically, the housing 2 is formed by injection molding, and is provided with fastening points 5 for receiving the fasteners 4. If another lighting drive module 3 having a different size needs to be mounted, the positions of the fastening points 5 on the housing 2 need to be changed. In other words, different housing molds need to be made to injection mold different housings, so as to adapt to lighting drive modules in different sizes. This will increase the design and manufacturing cost of vehicle lights.

The US 6161951 A relates to a vehicle headlamp including a discharge bulb and a lighting circuit case disposed within the lamp body allowing an easy removal of the lighting circuit case. The lamp body is composed of a main body and a cover. An opening is formed in the lower wall of the main body and the cover is attached to the main body of the lamp body so as to close the opening. A mounting portion of lighting circuit case is disposed in the cover. The cover is mounted to the main body in a state where the lighting circuit case is fitted with the mounting portion of the lighting case. The cover is mounted to the main body by screws while being abutted on the main body via an annular gasket. An annular groove is formed in the lower wall of the main body for mounting the gasket. A protrusion having a rectangular cross section is formed in substantially the centre of the annular groove which extends there along. The gasket has an H-shaped cross section such that an upper recessed portion thereof is engaged with the protrusion when the gasket is fitted in the annular groove. A lower recessed portion of the gasket is formed so as to be fitted with the tip of the peripheral flange of the cover while being abutted on the main body.

Further vehicle light is known from FR 3 003 336 A1.

### SUMMARY

It is an object of the present invention to provide an improved vehicle light to address the above issues in the prior art.

For this object, the present invention provides a vehicle light including: a housing configured to accommodate a lighting module of the vehicle light; a lighting drive module configured to drive the lighting module; and a mounting bracket; wherein the mounting bracket and the housing are separately formed and the mounting bracket is fixed to the housing; wherein the lighting drive module is fixed to the mounting bracket. The mounting bracket is in the form of a frame and is formed by injection molding, wherein the mounting bracket comprises a bracket body, and the bracket body is provided with a plurality of first fastening portions and a plurality of second fastening portions, wherein the mounting bracket is adapted to be fixed to the housing via the plurality of first fastening portions and fixed to the lighting drive module via the plurality of second fastening portions.

A first accommodating groove is provided in the housing to accommodate a first seal, comprising a first rib provided on a bottom wall of the first accommodating groove. A second rib is provided on the bracket body of the mounting bracket. The first rib and the second rib are aligned with each other and compress the first seal therebetween.

A second accommodating groove is provided in the mounting bracket to accommodate a second seal, comprising a third rib provided on a bottom wall of the second accommodating groove. A fourth rib is provided on the lighting drive module, wherein the third rib and the fourth rib are aligned with each other and compress the second seal therebetween.

Since the lighting drive module is fixed to the housing of the vehicle light via the mounting bracket, adjusting the configuration and/or size of the mounting bracket allows lighting drive modules in different configurations and/or sizes to be mounted to the housing of the vehicle light without changing the size and/or configuration of the housing of the vehicle light. That is, there is no need to design and manufacture housings of different specifications to adapt to lighting drive modules in different configurations and/or sizes, thereby reducing the cost of making the mold for the housing. As the mounting bracket has a smaller volume and relatively simpler structure compared to the housing, the above configuration can further reduce the overall design and manufacturing cost of the vehicle light.

According to the above technical concept, the present invention may further include one or more of the following optional embodiments.

In some optional embodiments, the bracket body extends substantially along a plane, such that the multiple first fastening portions and the multiple second fastening portions are substantially located in the same plane.

In some optional embodiments, the bracket body includes a first body section and a second body section that are connected to each other and are not coplanar, wherein the multiple first fastening portions are provided at the first body section, and the multiple second fastening portions are provided at the second body section.

In some optional embodiments, each of the first fastening portions is in the form of an opening, and the housing includes multiple first fastening holes; wherein the vehicle light further includes multiple first fasteners, and each first fastener is adapted to be at least partially received in the corresponding first fastening portion and first fastening hole to fix the mounting bracket to the housing.

In some optional embodiments, each of the second fastening portions is in the form of an opening, and the lighting drive module includes multiple second fastening holes; wherein the vehicle light further includes multiple second fasteners, and each second fastener is adapted to be at least partially received in the corresponding second fastening portion and second fastening hole to fix the lighting drive module to the mounting bracket.

The vehicle light according to the present invention can be adapted to lighting drive modules in various configurations and/or sizes by means of the mounting bracket, thereby reducing the design and manufacturing cost of the vehicle light.

### BRIEF DESCRIPTION OF THE DRAWINGS

Other features and advantages of the present invention will be readily understood through the following optional embodiments described in detail with reference to the accompanying drawings, in which the same reference numerals indicate the same or similar components, and
FIG. 1 is a perspective view of a vehicle light in the background technology;
FIG. 2 is a partially sectioned view of a vehicle light according to a first embodiment of the present invention;
FIG. 3A is a cross-sectional view of a mounting bracket of the vehicle light in FIG. 2;
FIG. 3B is a cross-sectional view of a lighting drive module of the vehicle light in FIG. 2; and
FIG. 4 is a cross-sectional view of the mounting bracket of the vehicle light according to a second embodiment of the present invention.

### DETAILED DESCRIPTION

The implementation and usage of the embodiments are discussed in detail below. However, it should be understood that the specific embodiments discussed herein are merely intended to illustrate specific ways of implementing and using the present invention, and are not intended to limit the scope of the present invention. In describing structures and positions of various components of a vehicle, the orientation-related expressions, such as "upper", "lower", "top", "bottom", "front" and "rear", are not absolute, but relative.

The terms, such as "first" and "second", are only used for description, and should not be construed as indicating or implying relative importance or implicitly indicating the number of technical features referred to. In the present disclosure, unless otherwise specified, the terms, such as "mounting", "joining", "connection", and "fixation", should be understood in a broad sense. For example, "connection" may be a fixed connection, a detachable connection, or an integral connection; a direct connection or an indirect connection via an intermediary. For those skilled in the art, specific meanings of the above terms in the present disclosure should be understood according to specific circumstances.

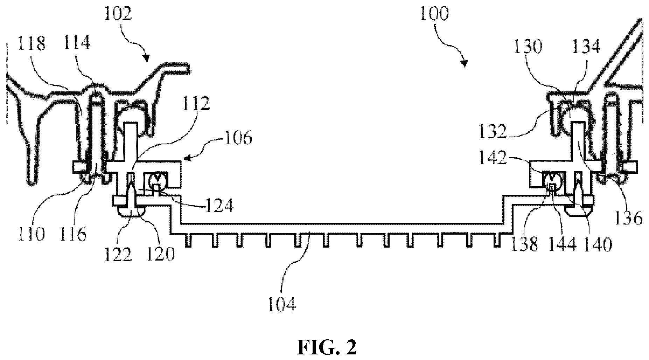

FIG. 2 to FIG. 3B illustrate a vehicle light 100 and its constituent components according to a first embodiment of the present invention. The vehicle light 100 may be a light on a vehicle for providing illumination and/or signaling, such as headlight, taillight, turn light, etc.

Referring to FIG. 2 to FIG. 3B, the vehicle light 100 includes a housing 102, a lighting drive module 104, and a mounting bracket 106. The housing 102 is configured to accommodate a lighting module (not shown). The lighting drive module 104 is configured to drive/control the lighting module to provide desired illumination effect and/or signaling effect. The mounting bracket 106 and the housing 102 are separately formed and the mounting bracket 106 is fixed to the housing 102. The lighting drive module 104 is fixed to the mounting bracket 106. Optionally, the housing 102 may be separately formed by injection molding. The mounting bracket 106 is separately formed from housing 102 by injection molding.

Since the lighting drive module is fixed to the housing of the vehicle light via the mounting bracket, adjusting the configuration and/or size of the mounting bracket allows lighting drive modules in different configurations and/or sizes to be mounted to the housing of the vehicle light without changing the size and/or configuration of the housing of the vehicle light. That is, there is no need to design and manufacture housings of different specifications to adapt to lighting drive modules in different configurations and/or sizes, thereby reducing the cost of making the mold for the housing. As the mounting bracket has a smaller volume and relatively simpler structure compared to the housing, the above configuration can further reduce the overall design and manufacturing cost of the vehicle light.

Referring to FIG. 2 to FIG. 3B, the mounting bracket 106 is in the form of a frame. The mounting bracket 106 includes a bracket body 108. The bracket body 108 is provided with multiple first fastening portions 110 and multiple second fastening portions 112. The mounting bracket 106 is fixed to the housing 102 by means of the multiple first fastening portions 110, and the mounting bracket 106 is fixed to the lighting drive module 104 by means of the multiple second fastening portions 112, so that the lighting drive module 104 is mounted to the housing 102 via the mounting bracket 106. As shown in FIG. 2 to FIG. 3B, the bracket body 108 extends substantially along a plane, such that the multiple first fastening portions 110 and the multiple second fastening portions 112 are substantially located in the same plane.

Each of the multiple first fastening portions 110 may be in the form of an opening. The housing 102 may include multiple first fastening holes 114. The vehicle light 100 may further include multiple first fasteners 116, and each first fastener 116 may be at least partially received in the corresponding first fastening portion 110 and first fastening hole 114 to fix the mounting bracket 106 to the housing 102.

As shown in FIG. 2 to FIG. 3B, each first fastening portion 110 may extend through the bracket body 108. Each first fastening hole 114 may be provided/opened in a first boss 118 on the housing 102 and include internal threads. Each first fastener 116 may be an external threaded fastener such as a bolt or screw and be passed through the corresponding first fastening portion 110 and screwed into the corresponding first fastening hole 114. It is conceivable that the method and structure for fixing the mounting bracket with the housing are not limited thereto, and the mounting bracket may also be fixed to the housing by means of, for example, snap connection.

Each of the multiple second fastening portions 112 may be in the form of an opening. The lighting drive module 104 may include multiple second fastening holes 120. The vehicle light 100 may further include multiple second fasteners 122, and each second fastener 122 may be adapted to be at least partially received in the corresponding second fastening portion 112 and second fastening hole 120 to fix the lighting drive module 104 to the mounting bracket 106.

As shown in FIG. 2 to FIG. 3B, each second fastening portion 112 may be provided/opened in a second boss 124 on the bracket body 108 and include internal threads. The lighting drive module 104 may include a module body 126 and multiple fastening lugs 128 arranged around the module body 126. Each second fastening hole 120 may extend through the corresponding fastening lug 128. Each second fastener 122 may be an external threaded fastener such as a bolt or screw and be passed through the corresponding second fastening hole 120 and screwed into the corresponding second fastening portion 112.

It is conceivable that, in a case that the size of the lighting drive module to be mounted is changed (in other words, the positions of the multiple second fastening holes on the lighting drive module are changed), the positions of the multiple second fastening portions of the mounting bracket can be changed accordingly, so that each second fastening portion can be aligned with the corresponding second fastening hole, allowing the lighting drive module to be fixed to the mounting bracket via multiple second fasteners.

It is conceivable that the method and structure for fixing the mounting bracket with the lighting drive module are not limited thereto, and the lighting drive module may also be fixed to the mounting bracket by means of, for example, snap connection.

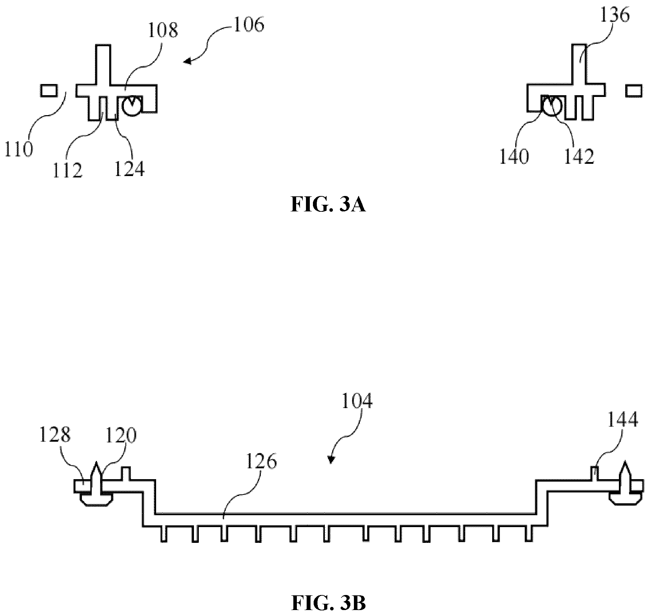

As shown in FIG. 2 to FIG. 3B, a first seal 130 is provided between the housing 102 and the mounting bracket 106. A first accommodating groove 132 is provided in the housing 102 to accommodate the first seal 130. A first rib 134 is provided on a bottom wall of the first accommodating groove 132 of the housing 102, and accordingly, a second rib 136 is provided on the bracket body 108 of the mounting bracket 106. When the mounting bracket 106 is fixed to the housing 102, the first rib 134 and the second rib 136 are aligned with each other and compress the first seal 130 therebetween, such that the first seal 130 reaches a predetermined compression ratio, thereby achieving a desirable sealing effect. The first seal 130, the first rib 134 and the second rib 136 may all be ring-shaped. It is conceivable that the first accommodating groove may also be provided in the mounting bracket. It is also conceivable that the rib may be only provided on one of the housing and the mounting bracket to compress the first seal.

As shown in FIG. 2 to FIG. 3B, a second seal 138 is provided between the mounting bracket 106 and the lighting drive module 104. A second accommodating groove 140 is provided in the mounting bracket 106 to accommodate the second seal 138. A third rib 142 is provided on a bottom wall of the second accommodating groove 140 of the mounting bracket 106, and accordingly, a fourth rib 144 is provided on the lighting drive module 104. When the lighting drive module 104 is fixed to the mounting bracket 106, the third rib 142 and the fourth rib 144 are aligned with each other and compress the second seal 138 therebetween, such that the second seal 138 reaches a predetermined compression ratio, thereby achieving a desirable sealing effect. The second seal 138, the third rib 142 and the fourth rib 144 may all be ring-shaped. It is conceivable that the second accommodating groove may also be provided in the lighting drive module. It is also conceivable that the rib may be only provided on one of the lighting drive module and the mounting bracket to compress the second seal.

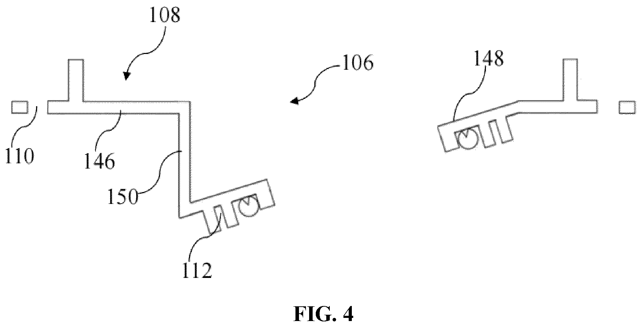

FIG. 4 shows the mounting bracket of the vehicle light according to the second embodiment of the present invention. The housing and lighting drive module of the vehicle light according to the first embodiment have the same structure as the housing and lighting drive module of the vehicle light according to the second embodiment. The mounting bracket of the vehicle light according to the first embodiment differs from the mounting bracket of the vehicle light according to the second embodiment in that: the bracket body 108 of the mounting bracket 106 of the vehicle light according to the second embodiment includes a first body section 146 and a second body section 148 that are connected to each other and are not coplanar, wherein the multiple 1 110 are provided at the first body section 146, and the multiple second fastening portions 112 are provided at the second body section 148. The following description focuses on the differences between the two embodiments, and the similarities are not repeated.

Referring to FIG. 4, the bracket body 108 of the mounting bracket 106 for the vehicle light according to the second embodiment includes a first body section 146, a second body section 148, and a third body section 150. A part of the first body section 146 is connected to the second body section 148 via the third body section 150, and another part of the first body section 146 is directly connected to the second body section 148. The extension plane of the first body section 146 and the extension plane of the second body section 148 are at a certain angle to each other, such that the multiple first fastening portions 110 on the first body section 146 and the multiple second fastening portions 112 on the second body section 148 are located on different planes which are at an angle to each other. The structure of the bracket body 108 of the mounting bracket 106 is advantageous for situations where there exist other components, which may occupy the installation space of the lighting drive module, in the installation environment around the vehicle light. The irregular structure of the bracket body 108 of the mounting bracket 106 can avoid the components around the vehicle light, so that the lighting drive module can be successfully installed. It is conceivable that the structure of the bracket body of the mounting bracket is not limited thereto, but can be reasonably designed according to the structure and size of the components in the surrounding environment of the vehicle light, as well as the structure and size of the lighting drive module.

It should also be understood that the various components and features described herein can be made of a variety of materials, including, but not limited to, polymer, rubber, metal and other suitable materials familiar to those skilled in the art or combinations thereof. The embodiments shown in FIG. 2 to FIG. 4 only illustrate the shape, size and arrangement of the optional components of the vehicle light according to the present invention. However, these embodiments are merely intended to illustrate, rather than to limit. Other shapes, sizes and arrangements may be adopted without departing from the scope of the present invention, which is limited only by the appended claims.

The technical contents and technical features of the present invention have been disclosed as above. However, it is conceivable that under the creative concept of the present invention, those skilled in the art can easily make modifications, variants and equivalents of these embodiments according to the invention. For example, features shown or described as part of one embodiment may be combined with another embodiment to produce another embodiment. The present invention is intended to cover these modifications, variants and equivalents. The description of the foregoing embodiments is illustrative rather than restrictive, and the scope of protection of the present invention is determined by the appended claims.

## Claims

1. A vehicle light (100) comprising:
a housing (102) configured to accommodate a lighting module of the vehicle light (100);
a lighting drive module (104) configured to drive the lighting module; and
a mounting bracket (106), the mounting bracket (106) and the housing (102) being separately formed, the mounting bracket (106) being fixed to the housing (102);
wherein the lighting drive module (104) is fixed to the mounting bracket (106); wherein the mounting bracket (106) is in the form of a frame and is formed by injection molding, wherein the mounting bracket (106) comprises a bracket body (108), and the bracket body (108) is provided with a plurality of first fastening portions (110) and a plurality of second fastening portions (112), wherein the mounting bracket (106) is fixed to the housing (102) via the plurality of first fastening portions (110) and fixed to the lighting drive module (104) via the plurality of second fastening portions (112)
wherein a first accommodating groove (132) is provided in the housing (102) to accommodate a first seal (130), comprising a first rib (134) provided on a bottom wall of the first accommodating groove (132),
wherein a second rib (136) is provided on the bracket body (108) of the mounting bracket (106), wherein the first rib (134) and the second rib (136) are aligned with each other and compress the first seal (130) therebetween,
and wherein a second accommodating groove (140) is provided in the mounting bracket (106) to accommodate a second seal (138), comprising a third rib (142) provided on a bottom wall of the second accommodating groove (140),
wherein a fourth rib (144) is provided on the lighting drive module (104), wherein the third rib (142) and the fourth rib (144) are aligned with each other and compress the second seal (138) therebetween.

2. The vehicle light (100) according to claim 1, wherein the bracket body (108) extends substantially along a plane, such that the plurality of first fastening portions (110) and the plurality of second fastening portions (112) are substantially located in the same plane.

3. The vehicle light (100) according to claim 1, wherein the bracket body (108) comprises a first body section (146) and a second body section (148) that are connected to each other and are not coplanar, wherein the plurality of first fastening portions (110) are provided at the first body section (146), and the plurality of second fastening portions (112) are provided at the second body section (148).

4. The vehicle light (100) according to any one of claims 1 to 3, wherein the first fastening portion (110) is in the form of an opening, and the housing (102) comprises a plurality of first fastening holes (114); wherein the vehicle light (100) further comprises a plurality of first fasteners (116), and each first fastener (116) is adapted to be at least partially received in corresponding first fastening portion (110) and first fastening hole (114) to fix the mounting bracket (106) to the housing (102).

5. The vehicle light (100) according to any one of claims 1 to 4, wherein the second fastening portion (112) is in the form of an opening, and the lighting drive module (104) comprises a plurality of second fastening holes (120); wherein the vehicle light (100) further comprises a plurality of second fasteners (122), and each second fastener (122) is adapted to be at least partially received in corresponding second fastening portion (112) and second fastening hole (120) to fix the mounting bracket (106) to the lighting drive module (104).

## Patentansprüche

1. Fahrzeugleuchte (100) mit:
ein Gehäuse (102), das zur Aufnahme eines Beleuchtungsmoduls der Fahrzeugleuchte (100) ausgebildet ist;
ein Beleuchtungsantriebsmodul (104), das zum Antreiben des Beleuchtungsmoduls konfiguriert ist, und
eine Montagehalterung (106), wobei die Montagehalterung (106) und das Gehäuse (102) getrennt ausgebildet sind, wobei die Montagehalterung (106) am Gehäuse (102) befestigt ist;
wobei das Beleuchtungsantriebsmodul (104) an der Montagehalterung (106) befestigt ist; wobei die Montagehalterung (106) die Form eines Rahmens hat und durch Spritzgießen gebildet ist, wobei die Montagehalterung (106) einen Halterungskörper (108) aufweist und der Halterungskörper (108) mit einer Vielzahl von ersten Befestigungsabschnitten (110) und einer Vielzahl von zweiten Befestigungsabschnitten (112) versehen ist, wobei die Montagehalterung (106) an dem Gehäuse (102) über die Vielzahl von ersten Befestigungsabschnitten (110) befestigt und an dem Beleuchtungsantriebsmodul befestigt ist (104) über die Vielzahl von zweiten Befestigungsabschnitten (112)
wobei eine erste Aufnahmenut (132) in dem Gehäuse (102) vorgesehen ist, um eine erste Dichtung (130) aufzunehmen, umfassend eine erste Rippe (134), die an einer Bodenwand der ersten Aufnahmenut (132) vorgesehen ist,
wobei eine zweite Rippe (136) an dem Trägerkörper (108) des Montageträgers (106) vorgesehen ist, wobei die erste Rippe (134) und die zweite Rippe (136) miteinander ausgerichtet sind und die erste Dichtung (130) dazwischen zusammendrücken,
und wobei eine zweite Aufnahmenut (140) in der Montagehalterung (106) vorgesehen ist, um eine zweite Dichtung (138) aufzunehmen, umfassend eine dritte Rippe (142), die an einer Bodenwand der zweiten Aufnahmenut (140) vorgesehen ist,
wobei eine vierte Rippe (144) an dem Beleuchtungsantriebsmodul (104) vorgesehen ist, wobei die dritte Rippe (142) und die vierte Rippe (144) miteinander ausgerichtet sind und die zweite Dichtung (138) dazwischen zusammendrücken.

2. Fahrzeugleuchte (100) nach Anspruch 1, wobei sich der Halterungskörper (108) im Wesentlichen entlang einer Ebene erstreckt, sodass die Vielzahl von ersten Befestigungsabschnitten (110) und die Vielzahl von zweiten Befestigungsabschnitten (112) im Wesentlichen in derselben Ebene angeordnet sind.

3. Fahrzeugleuchte (100) nach Anspruch 1, wobei der Halterungskörper (108) einen ersten Körperabschnitt (146) und einen zweiten Körperabschnitt (148) aufweist, die miteinander verbunden und nicht koplanar sind, wobei die Vielzahl von ersten Befestigungsabschnitten (110) an dem ersten Körperabschnitt (146) vorgesehen ist und die Vielzahl von zweiten Befestigungsabschnitten (112) an dem zweiten Körperabschnitt (148) vorgesehen sind.

4. Fahrzeugleuchte (100) nach einem der Ansprüche 1 bis 3, wobei der erste Befestigungsabschnitt (110) die Form einer Öffnung hat und das Gehäuse (102) eine Vielzahl von ersten Befestigungslöchern (114) aufweist; wobei die Fahrzeugleuchte (100) ferner eine Vielzahl von ersten Befestigungselementen (116) aufweist, und jedes erste Befestigungselement (116) so ausgebildet ist, dass es zumindest teilweise in dem entsprechenden ersten Befestigungsabschnitt (110) und dem ersten Befestigungsloch (114) aufgenommen werden kann, um die Montagehalterung (106) an dem Gehäuse (102) zu befestigen.

5. Fahrzeugleuchte (100) nach einem der Ansprüche 1 bis 4, wobei der zweite Befestigungsabschnitt (112) die Form einer Öffnung hat und das Beleuchtungsantriebsmodul (104) eine Vielzahl von zweiten Befestigungslöchern (120) aufweist; wobei die Fahrzeugleuchte (100) ferner eine Vielzahl von zweiten Befestigungselementen (122) aufweist und jedes zweite Befestigungselement (122) so ausgelegt ist, dass es zumindest teilweise in dem entsprechenden zweiten Befestigungsabschnitt (112) und dem zweiten Befestigungsloch (120) aufgenommen werden kann, um den Montageträger (106) an dem Beleuchtungsantriebsmodul (104) zu befestigen.

## Revendications

1. Feu de véhicule (100) comprenant :
un boîtier (102) configuré pour recevoir un module d'éclairage du feu de véhicule (100);
un module d'entraînement d'éclairage (104) configuré pour entraîner le module d'éclairage; et
un support de montage (106), le support de montage (106) et le boîtier (102) étant formés séparément, le support de montage (106) étant fixé au boîtier (102);
**caractérisé en ce que** le module d'entraînement d'éclairage (104) est fixé au support de montage (106); **en ce que** le support de montage (106) est en forme de cadre et est formé par moulage par injection, **en ce que** le support de montage (106) comprend un corps de support (108), et le corps de support (108) est pourvu d'une pluralité de premières portions de fixation (110) et d'une pluralité de deuxièmes portions de fixation (112), **en ce que** le support de montage (106) est fixé au boîtier (102) via la pluralité de premières portions de fixation (110) et fixé au module d'entraînement d'éclairage (104) via la pluralité de deuxièmes portions de fixation 112
dans lequel une première rainure de réception (132) est prévue dans le logement (102) pour recevoir un premier joint (130), comprenant une première nervure (134) prévue sur une paroi de fond de la première rainure de réception (132),
une deuxième nervure (136) est prévue sur le corps de potence (108) de la potence de montage (106), la première nervure (134) et la deuxième nervure (136) étant alignées l'une avec l'autre et comprimant le premier joint (130) entre elles,
et dans lequel une deuxième rainure de réception (140) est prévue dans la console de montage (106) pour recevoir un deuxième joint (138), comprenant une troisième nervure (142) prévue sur une paroi de fond de la deuxième rainure de réception (140),
dans lequel une quatrième nervure (144) est prévue sur le module d'entraînement d'éclairage (104), la troisième nervure (142) et la quatrième nervure (144) étant alignées l'une avec l'autre et comprimant le deuxième joint (138) entre elles.

2. Feu de véhicule (100) selon la revendication 1, **caractérisé en ce que** le corps de support (108) s'étend sensiblement selon un plan, de sorte que la pluralité de premières portions de fixation (110) et la pluralité de deuxièmes portions de fixation (112) sont sensiblement situées dans un même plan.

3. Feu de véhicule (100) selon la revendication 1, **caractérisé en ce que** le corps de support (108) comprend un premier tronçon de corps (146) et un deuxième tronçon de corps (148) reliés entre eux et non coplanaires, **en ce que** la pluralité de premières portions de fixation (110) sont prévues au niveau du premier tronçon de corps (146), et la pluralité de deuxièmes portions de fixation (112) sont prévues au niveau du deuxième tronçon de corps (148).

4. Feu de véhicule (100) selon l'une quelconque des revendications 1 à 3, dans lequel la première partie de fixation (110) est en forme d'ouverture, et le boîtier (102) comprend une pluralité de premiers trous de fixation (114); dans lequel le feu de véhicule (100) comprend en outre une pluralité de premières attaches (116), et chaque première attache (116) est adaptée pour être reçue au moins partiellement dans la première partie de fixation (110) et le premier trou de fixation (114) correspondents pour fixer la patte de montage (106) au boîtier (102).

5. Feu de véhicule (100) selon l'une quelconque des revendications 1 à 4, dans lequel la deuxième partie de fixation (112) est en forme d'ouverture, et le module d'entraînement d'éclairage (104) comprend une pluralité de deuxièmes trous de fixation (120); dans lequel le feu de véhicule (100) comprend en outre une pluralité de deuxièmes attaches (122), et chaque deuxième attache (122) est adaptée pour être reçue au moins partiellement dans la deuxième partie de fixation (112) et le deuxième trou de fixation (120) correspondents pour fixer la console de montage (106) au module d'entraînement d'éclairage (104).
